# EUROPÄISCHE PATENTANMELDUNG

(11) **EP 1 457 904 A1**
(43) Veröffentlichungstag der Anmeldung: **15.09.2004**
(21) Anmeldenummer: 04005493.4
(22) Anmeldetag: 08.03.2004
(51) Int. Cl.: G06F 17/60

(54) **System und Verfahren zur Bonifikation der Kenntnisnahme vorgegebener Dateninhalte**

(30) Priorität: 12.03.2003 DE 10311177
(71) Anmelder: Giesecke & Devrient GmbH, 81677 München (DE)
(72) Erfinder: Ciesinger, Daniel, 80637 München (DE)

(57) **Zusammenfassung**

Vorgeschlagen wird ein auf der Verwendung eines tragbaren Datenträgers (20) basierendes System zur Bonifikation der Kenntnisnahme vorgegebener Dateninhalte (28) durch einen Nutzer. Der tragbare Datenträger (20) ist über ein Nutzerendgerät (10) erreichbar, das zur Ausführung eines Netzzugriffsprogrammes (42) zur Ermittlung und Wiedergabe von in einem Datennetz (40) gespeicherten Dateninhalten eingerichtet ist. Auf dem tragbaren Datenträger (20) sind vorgegebene Dateninhalte (28), insbesondere Werbeinhalte, sowie ein Agentprogramm (30) eingerichtet, welches die Wiedergabe der vorgegebenen Dateninhalte (28) auf einem Nutzerendgerät (10) veranlaßt. Bei der Wiedergabe zeichnet das Agentprogramm (30) Angaben über mit der Wiedergabe verbundene Aktionen des Nutzers auf. Aufgrund der aufgezeichneten Angaben ermitteln der tragbare Datenträger (20) oder ein Systemterminal (60) einen Bonus, den der Nutzer beim Erwerb von Waren oder Dienstleistungen einsetzen kann.

## Beschreibung

Die Erfindung betrifft die Verbreitung von elektronischer Werbung im weitesten Sinne und die Messung ihrer Wirksamkeit. Aus der EP 1 068 581 ist ein System zum elektronischen Darstellen von Werbepräsentationen und zum Erzeugen von Rabattcoupons bekannt, in dem ein Nutzer geldwerte Coupons erhält, wenn er auf einem persönlichen Computer elektronische Werbung zur Kenntnis nimmt. Die Werbung wird zuvor in elektronischer Form vom Server eines Werbetreibenden zusammen mit einem Wiedergabeprogramm an den Nutzercomputer übertragen. Das Wiedergabeprogramm bewirkt die Wiedergabe der Werberepräsentation auf dem Computer des Nutzers, beobachtet, ob der Nutzer eine Werberepräsentation vollständig zur Kenntnis nimmt und erzeugt gegebenenfalls einen elektronischen Rabattcoupon. Der Coupon wird auf einer an den Nutzercomputer angeschlossenen Smart Card gespeichert und kann nachfolgend beim Kauf von Waren eingelöst werden. Damit das Wiedergabeprogramm auf dem Nutzercomputer laufen kann, muß auf dem Nutzercomputer eine entsprechende Betriebssoftware installiert sein, die auch den Datenaustausch mit dem Server des Werbetreibenden realisiert. Das bekannte System vereinfacht für Herausgeber und Nutzer die Handhabung von Rabattcoupons. Voraussetzung für die Nutzung des Systems ist allerdings, daß auf dem Nutzercomputer ein zur Ausführung von Wiedergabeprogramm geeignetes Betriebsprogramm eingerichtet ist. Nur an solchermaßen eingerichteten Nutzercomputern können Coupons erzeugt werden.

Der Erfindung liegt die Aufgabe zugrunde, ein System zur Bonifikation eines Nutzers für die Kenntnisnahme von vorgegebenen Dateninhalten, insbesondere von elektronischer Werbung, anzugeben, das geringere Anforderungen an die Nutzungsumgebung stellt.

Die Aufgabe wird gelöst durch ein System mit den Merkmalen des Hauptanspruchs sowie durch ein Verfahren mit den Merkmalen des unabhängigen Anspruchs 8. Das erfindungsgemäße System hat den Vorteil, daß der genutzte tragbare Datenträger an einer Vielzahl von Nutzerendgeräten verwendbar ist. Ein besonderes Betriebsprogramm zur Ausführung von Software zur Wiedergabe von Werberepräsentationen ist nicht erforderlich.

Ein weiterer Vorteil des erfindungsgemäßen Systems besteht darin, daß sowohl die Erfassung der Kenntnisnahme elektronischer Werbung durch einen Nutzer als auch die elektronische Bonifizierung gemeinsam auf dem verwendeten tragbaren Datenträger und damit in einer sicheren Umgebung ablaufen. Dies verringert unmittelbar die Gefahr der Manipulation von Bonifikationen auf dem Datenträger und damit den erforderlichen Aufwand zur Absicherung gegen Manipulationen.

In vorteilhafter Weise gestattet das erfindungsgemäße System eine sehr genaue Erfassung der Wirkung von elektronischer Werbung, indem alle von einem Nutzer in Reaktion auf die Wiedergabe einer elektronischer Werbung vorgenommenen Aktionen aufgezeichnet werden. Der tragbare Datenträger kann dabei insbesondere eingesetzt werden um zu verfolgen, ob eine wiedergegebene elektronische Werbung schließlich zu einem Kauf führt.

Vorteilhaft können auf dem tragbaren Datenträger Hilfsprogrammodule installiert sein, welche die Bewertung der Kenntnisnahme von Werbung unterstützen. Beispielsweise kann ein Zähler eingerichtet sein, der die Zahl der Zugriffe auf eine elektronische Werbung oder die Zahl der Zugriffe auf bestimmte, beworbene Dateninhalte registriert. Insgesamt erlaubt das erfindungsgemäße System eine umfangreiche, qualifizierte Buchführung über die Wirksamkeit von elektronischer Werbung.

Unter Bezugnahme auf die Zeichnung wird nachfolgend ein Ausführungsbeispiel der Erfindung näher erläutert.

Es zeigen
Figur 1 die Komponenten eines zur Bonifikation der Kenntnisnahme vorgegebener Dateninhalte geeigneten Systems,
Figur 2 ein Flußdiagramm der Nutzung eines tragbaren Datenträgers in dem vorgeschlagenen System,
Figur 3 ein Flußdiagramm der Verwendung eines tragbaren Datenträgers bei Durchführung eines Kaufs,
Figur 4 ein Flußdiagramm zur Durchführung der Aktualisierung vorgegebener Dateninhalte auf einen tragbaren Datenträger,
Figuren 5 und 6 jeweils als Flußdiagramm zwei Varianten zur Durchführung der Wiedergabe vorgegebener Dateninhalte,
Figur 7 mögliche Bildschirmdarstellungen, wie sie einem Nutzer bei der Nutzung eines tragbaren Datenträgers präsentiert werden könnten.

### Beschreibung

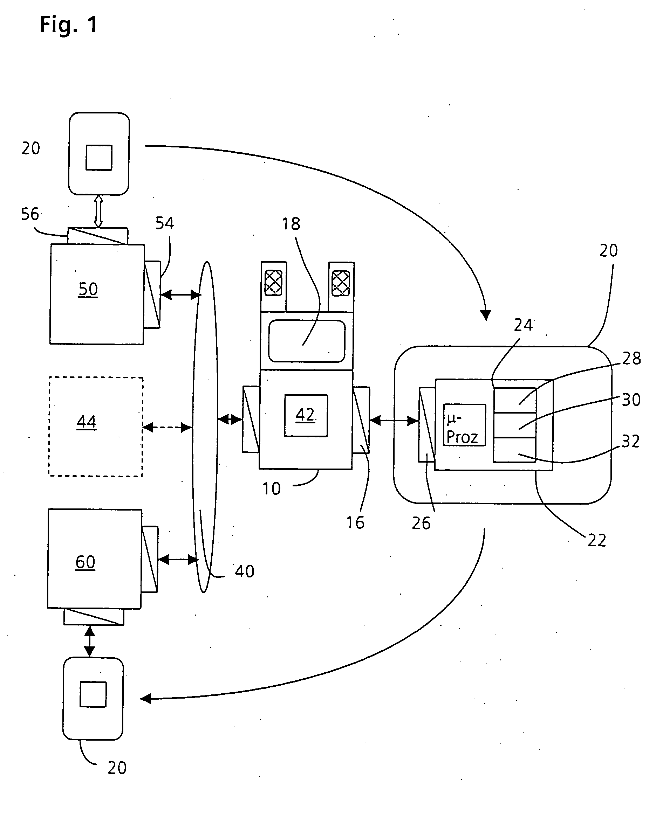

Figur 1 zeigt die Grundkomponenten eines erfindungsgemäßen Systems mit einem Nutzerendgerät 10, einem tragbaren Datenträger 20, einem Datennetz 40, einer Referenzstation 50 sowie einem Systemterminal 60.

Das Nutzerendgerät 10 basiert auf einem üblichen Computer und besitztdessen typische Grundelemente. In üblicher Weise besitzt das Nutzerendgerät 10 weiter Aus- und Eingabemittel 18 zur Wiedergabe von in Datensätzen abgelegter Information, ein Netzzugriffsprogramm 42 zur Ermittlung und Übertragung von Datensätzen mit wiederzugebender Information, eine Schnittstelle 16 zur Verbindung der Nutzerendgerätes 10 mit einem tragbaren Datenträger 20 sowie mindestens eine Schnittstelle 14 zur Herstellung des Zugangs zu einem Datennetz 40, in dem Datensätze mit wiederzugebender Information gespeichert sind. Die Datenträgerschnittstelle 16 ist zweckmäßig als Standardschnittstelle, etwa als USB- oder FIREWIRE-Schnittstelle ausgeführt. Die Ausgabemittel 18 umfassen typischerweise einen Bildschirm und/oder Lautsprecher, die Eingabemittel eine Tastatur und/oder eine Spracheingabeeinrichtung.

Über die Schnittstelle 14 ist das Nutzerendgerät 10 mit einem Datennetz 40 verbindbar, an das eine Vielzahl von Teilnehmern 44 angeschlossen ist. Die Teilnehmer 44 können von beliebigem Typ sein und stellen Datensätze zur Wiedergabe auf den Anzeigemitteln 18 geeignete Information bereit. Das Datennetz 40 kann insbesondere das Internet sein. Die Datensätze sind darin insbesondere in Form von zur Wiedergabe über ein Nutzerendgerät 10 geeigneten Seiten abgelegt, die anhand einer jeweils zugeordneten Datennetzadresse in Form einer URL (Uniform Resource Locator) aufrufbar sind.

Das Netzzugriffsprogramm 42 ist entsprechend vorzugsweise ein üblicher Browser, d. h. ein Softwareprogramm, mit dessen Hilfe ein Nutzer in dem Datennetz 40 gespeicherte Information ermitteln und auf den Ausgabemitteln 18 zur Wiedergabe bringen kann. Insbesondere ermöglicht das Netzzugriffsprogramm 42 Ermittlung und Ausgabe von auf einem tragbaren Datenträger 20 gespeicherter Information.

Die Schnittstelle 14 ist ebenfalls als Standardschnittstelle, zweckmäßig als USB- oder FIREWIRE-Schnittstelle ausgeführt. Vorgesehen sein kann, daß nur die Schnittstelle 14 vorhanden ist und der tragbare Datenträger 20 als gewöhnlicher Netzteilnehmer über das Datennetz 40 mit dem Nutzerendgerät 10 in Verbindung steht.

Der tragbare Datenträger 20 ist vorzugsweise eine Chipkarte mit einem integrierten Schaltkreis 22, der über alle Elemente eines üblichen Computers verfügt. Insbesondere verfügt der integrierte Schaltkreis 22 über Speichermittel 24 zur Ablage von Programmen und Daten sowie über einen Prozessorkern 26 zur Ausführung von in den Speichermitteln 24 abgelegten Prögrammdaten. Die Speichermittel 24 umfassen dabei neben einem Abschnitt zur Aufnahme eines Betriebsprogramms insbesondere einen Abschnitt zur Aufnahme von vorgegebenen Dateninhalten 28, einen Abschnitt zur Aufnahme eines Agentprogrammes 30 zur Veranlassung der Wiedergabe vorgegebener Dateninhalte, sowie einen Protokollabschnitt 32 zur Aufnahme von Loyalitätsangaben, welche Aufschluß über Reaktionen eines Nutzers auf die Wiedergabe vorgegebener Dateninhalte 28 geben.

Dem integrierten Schaltkreis 22 ist eine Schnittstelle 36 zugeordnet, über die der tragbare Datenträger 20 mit einem Nutzerendgerät 10 verbindbar ist. Die Schnittstelle 36 korrespondiert zu der Schnittstelle 16 am Nutzerendgerät 10. Zweckmäßig ist sie als USB- oder FIREWIRE-Schnittstelle ausgeführt.

Der tragbare Datenträger 20 besitzt die Funktionalität eines Netzservers und gestattet die Wechselwirkung mit Endgeräten, die über ein geeignetes Netzzugriffsprogramm 42 verfügen. Insbesondere können mittels eines Netzzugriffsprogramms 42 in den Speichermitteln 24 abgelegte Dateninhalte über ein Nutzerendgerät 10, ein Systemterminal 60 oder eine Referenzstation 50 wiedergegeben werden. Daneben kann der tragbare Datenträger 20 für weitere Anwendungen eingerichtet sein, etwa für eine Geldkartenanwendung oder zur Anwendung als Berechtigungsnachweis.

Bei den vorgegebenen Dateninhalten 28 handelt es sich insbesondere um Waren-, Dienst-, oder Informationsangebote sowie um Werbung im weitesten Sinne, d.h. um Inhalte, die bei Wiedergabe eine bestimmte Reaktion des Nutzers auslösen sollen. Die vorgegebenen Dateninhalte 28 können statische HTML-Seiten sein, aber auch CGI-Scripte oder Applets beinhalten. In praxisnaher Ausführung besteht ein vorgegebener Dateninhalt 28 aus mehreren verknüpften Teilinhalten, wobei ein Grundinhalt auf dem tragbaren Datenträger 20 gespeichert ist, während der Hauptinhalt bei einem oder mehreren anderen Netzteilnehmern 44 liegt. Dabei beinhaltet der Grundinhalt eines vorgegebenen Dateninhaltes 28 Datennetzadressen ("links"), zu denen ein Nutzer automatisch oder nach aktiver Auswahl weiterverbunden wird. Die Datennetzadressen bezeichnen die an das Datennetz 40 angeschlossene Netzteilnehmer 44, in der Regel bestimmte Seiten eines Leistungs- oder Informationsanbieters, bei denen jeweils ein Hauptinhalt gespeichert ist.

Auf dem tragbaren Datenträger 20 sind mindestens ein, in der Regel mehrere Agentprogramme 30 eingerichtet, deren Aufgabe Wiedergabe und Vorbereitung der Wiedergabe vorgegebener Dateninhalte 28 ist. Ein Agentprogramm 30, vorzugsweise ein CGI-Skript, wird über eine geeignete Schnittstelle, typischerweise ein CGI (Common Gateway Interface) des auf dem tragbaren Datenträger 20 befindlichen Netzservers aufgerufen und mit Parametern versorgt. Dies geschieht in an sich bekannter Weise immer dann, wenn mittels des Netzzugriffsprogramms 42 eine Datennetzadresse, in der Regel eine URL (Uniform Resource Locator), ausgewählt wird, die dem Agentprogramm 30 zugeordnet ist. Wird beispielsweise die URL "http://isc/cgi-bin/view_bonus.cgi" in die Adressleiste des Netzzugriffprogrammes 42 eingegeben oder eine Weiterverbindiung (link) aktiviert, der auf diese URL verweist, so hat dies zur Folge, daß das Netzzugriffsprogramm 42 eine Anforderung, etwa der Form "GET /cgibin/view_bonus.cgi", an den tragbaren Datenträger 20 sendet, welche die Ausführung eines Agentprogrammes 30 auf dem tragbaren Datenträger 20 bewirkt. Das Agentprogramm 30 gibt seine Ergebnisse typischerweise als HTML-Seite aus, andere Dateiformate sind aber möglich.

Ein Agentprogramm 30 erfaßt weiterhin Angaben zu Aktionen, die ein Nutzer in Bezug auf einen eines vorgegebenen Dateninhalt 28 vornimmt. Erfaßt werden so die Wiedergabe eines vorgegebenen Dateninhaltes 28, Interaktionen des Nutzers mit einem vorgegebenen Dateninhalt 28, die Nutzung von angebotenen Weiterverbindungen sowie die Wahrnehmung von durch den vorgegebenen Dateninhalt 28 beworbenen oder dargestellten Angeboten.

Ein Agentprogramm 30 kann ferner dazu eingerichtet sein, aufgrund der erfaßten Angaben einen Bonus zu ermitteln, den der Nutzer zu einem späteren Zeitpunkt einlösen kann. Alternativ zur Ermittlung des Bonus unmittelbar auf dem tragbaren Datenträger 20 kann vorgesehen sein, daß das Agentprogramm 30 die Bonusermittlung in Wechselwirkung mit einem Systemterminal 60 oder einer Referenzstation 50 vornimmt. Dabei kann sich die Funktion des Agentprogrammes 30 darauf beschränken, dem Systemterminal 60 oder der Referenzstation 50 die aufgezeichneten Angaben zur Verfügung zu stellen.

Mittels der Referenzstation 50 werden Agentprogramme 30 und vorgegebene Dateninhalte 28 auf einen tragbaren Datenträger 20 gebracht. Weiter ist die Referenzstation 50 dazu eingerichtet, in den Speichermitteln 24 eines tragbaren Datenträgers 20 registrierte Angaben über von einem Nutzer vorgenommene Aktionen auszulesen und auszuwerten. Die Referenzstation 50 befindet sich vorzugsweise bei einem Herausgeber von tragbaren Datenträgern 20 oder bei dem Betreiber des Systems, dem ein tragbarer Datenträger 20 zugehört. Die Referenzstation 50 besitzt ebenfalls alle wesentlichen Elemente eines üblichen Computers und verfügt insbesondere über Programmittel, um neue Agentprogramme 30 und vorgegebene Dateninhalte 28 zu erstellen und zu verbreiten. Hierzu besitzt sie eine Schnittstelle 54 zum Anschluß der Referenzstation 50 an das Datennetz 40 sowie eine weitere Schnittstelle 56 für den Zugriff auf den integrierten Schaltkreis 28 eines trägbaren Datenträgers 20. Referenzstationen 50 können ein- oder mehrfach vorhanden sein.

Das Systemterminal 60 ist eine Anwendungsstation, an der ein Nutzer unter Verwendung des tragbaren Datenträges 20 eine Anwendung, etwa die Durchführung einer kartengestützten Zahlung oder die Autorisierung für den Zugriff auf ein Datensystem, durchführen kann. Es besitzt entsprechend Programm-, Wiedergabe- und Zugriffsmittel, um die im Speicherabschnitt 32 eines tragbaren Datenträgers 20 abgelegten Daten zu lesen und auszuwerten. Systemterminals 60 sind in der Regel mehrfach vorhanden und befinden sich vorzugsweise an öffentlich zugänglichen Standorten wie Banken, Geschäften, Organisationen u.s.w.

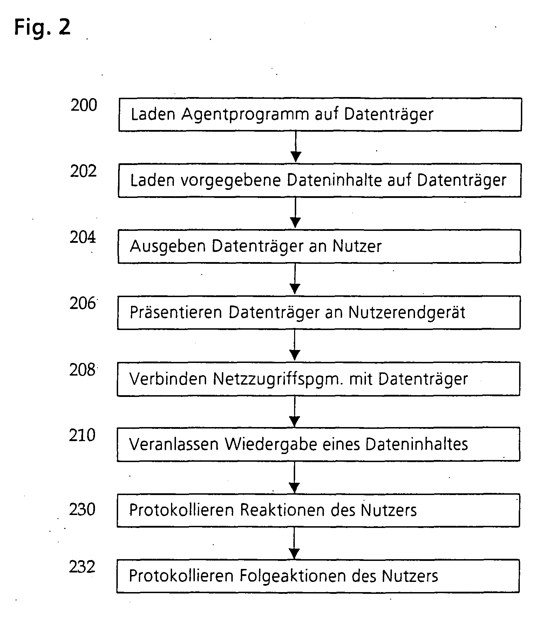

Figur 2 veranschaulicht als Flußdiagramm die erste Phase einer Bonifikation für die Kenntnisnahme vorgegebener Dateninhalte 28 in einem System, wie es in Fig. 1 gezeigt ist. Als vorgegebener Dateninhalt 28 wird nachfolgend der Anschaulichkeit halber stets eine Werbeinhalt zugrundegelegt; eine Einschränkung auf Werbeinhalte oder Werbung soll damit aber nicht ausgedrückt werden.

Die Handhabung setzt ein, indem auf dem tragbaren Datenträger 20 ein Agentprogramm 30 sowie ausgewählte Werbeinhalte 28, deren Kenntnisnahme durch einen Nutzer erreicht werden soll, auf dem tragbaren Datenträger 20 gespeichert werden, Schritte 200, 202. Die Speicherschritte erfolgen in der Regel an einer Referenzstation 50, d. h. bei einem Betreiber eines den tragbaren Datenträger 20 nutzenden Systems, beim Herausgeber von tragbaren Datenträgern 20 oder bei einem Werbetreibenden.

Sind ein Agentprogramm 30 und Werbeinhalte 28 gespeichert, wird der tragbare Datenträger 20 an einen Nutzer übergeben, Schritt 204.

Dieser präsentiert den tragbaren Datenträger 20 zu einem folgenden Zeitpunkt an einem Nutzerendgerät 10, Schritt 206 und stellt mittels des darauf eingerichteten Netzzugriffsprogramms 42 eine Datenverbindung zu dem tragbaren Datenträger 20 her, Schritt 208.

Nach Herstellung einer Verbindung zu dem tragbaren Datenträger 20 startet dort nach Aufruf durch das Netzzugriffsprogramm 42 das Agentprogramm 30. Es veranlaßt in der Folge das Netzzugriffsprogramm 42 dazu, einen Werbeinhalt 28 über die Ausgabemittel 18 des Nutzerendgerätes 10 wiederzugeben. Die Wiedergabe kann durch ein definiertes Steuersignal, bei Zugriff auf einen bestimmten auf dem Datenträger 20 gespeicherten Werbeinhalt 28 oder unmittelbar nach Verbindungsaufbau ausgelöst werden.

Die von einem Nutzer in Reaktion auf einen wiedergegebenen Werbeinhalt 28 vorgenommenen Aktionen werden durch Agentprogramme 30 protokolliert, Schritt 230.

Erkennt ein Agentprogramm 30, daß der Nutzer aufgrund der Wiedergabe eines Werbeinhaltes 28 eine durch die Wiedergabe vorgegebene Aktion ausführt, protokolliert das Agentprogramm 30 dies in dem Speicherabschnitt 32. Führt der Nutzer danach eine weitere, durch die erste Aktion bedingte Folgeaktion aus, erfaßt das Agentprogramm 30 auch diese und protokolliert eine weitere entsprechende Angabe in dem Speicherabschnitt 32, Schritt 232.

Eine von Agentprogrammen 30 protokollierte Folge von Aktionen eines Nutzers kann beispielsweise darin bestehen, daß der Nutzer als Werbeinhalt 28 zunächst eine Wiedergabe einer HTML-Werbeseite erhält, die ein Weiterschaltfeld anbietet, welches eine direkte Verknüpfung (link) zu einer Folgeseite, etwa einem Online-Geschäft, mithin zu einem weiteren Werbeinhalt 18 herstellt. Der Nutzer wechselt nun durch Betätigen des Weiterschaltfeldes zu der durch die Verknüpfung bestimmten Folgeseite, die eine weitere HTML-Werbeseite enthält. Die Wiedergabe der ersten Seite und der Folgeseite sowie die Betätigung des auf der ersten HTML-Seite angelegten Weiterschaltfeldes werden von Agentprogrammen 30 protokolliert. Der Protokollierschritt kann mehrfach wiederholt werden, wenn der Nutzer eine ganze Folge von HTML-Seiten ansieht, indem er jeweils ein Weiterschaltfeld betätigt.

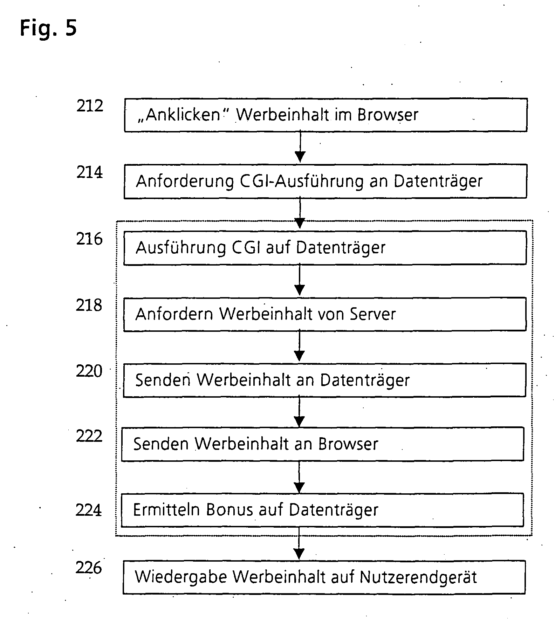

Figur 3 veranschaulicht als Flußdiagramm eine Durchführung der Bonifikation für zur Kenntnis genommene Werbeinhalte.

Nachdem der Nutzer auf einem tragbaren Datenträger 20 abgelegte Werbeinhalte 28 zur Kenntnis genommen hat und diese Kenntnisnahme durch ein Agentprogramm 30 protokolliert wurde, präsentiert er den tragbaren Datenträger 20 an einem Systemterminal 60, Schritt 300.

Das Systemterminal 60 liest hierauf aus dem Speicherabschnitt 32 des tragbaren Datenträgers 20 die dort von dem Agentprogramm 30 angelegten Loyalitätsangaben aus und ermittelt daraus einen Bonus, Schritt 302. Der Bonus kann ein Rabatt, eine Gutschrift oder ein anderer Vorteil für den Nutzer sein.
Alternativ kann die Ermittlung des Bonus auch unmittelbar auf dem tragbaren Datenträger 20 ohne Einschaltung eines Systemterminals 60 oder einer Referenzstation 50 erfolgen. Da die protokollierten Angaben den tragbaren Datenträger 20 in diesem Fall nicht verlassen; lassen sich hohe Datenschutzanforderungen erfüllen.

Unter Verwendung des zuvor bestimmten Bonus wird anschließend die von dem Nutzer beabsichtigte Aktion, beispielsweise ein Kauf abgewickelt, Schritt 304. Zur Bezahlung kann dabei ein elektronisches Bezahlungsverfahren eingesetzt werden, das auf demselben zur Bonusermittlung eingesetzten tragbaren Datenträger 20 eingerichtet ist.

Die Inanspruchnahme des Bonus bzw. die zu seiner Gewährung erfolgte Verwendung der Loyalitätsangaben vermerkt das Agentprogramm 30 durch einen entsprechenden Eintrag im Speicherabschnitt 32, Schritt 306.

Weiter erzeugt das Systemterminal 60 oder, falls er in den Kaufvorgang unmittelbar einbezogen ist, auch der tragbare Datenträger 20 selbst, einen Vermerk, Schritt 308, zur Dokumentation, daß ein Kaufvorgang unter Einsatz von Loyalitätsangaben bewirkt wurde, und zeichnet diesen Vermerk ebenfalls im Speicherabschnitt 32 des tragbaren Datenträgers 20 auf.

Im Speicherabschnitt 32 entsteht so eine in Bezug auf einen Werbeinhalt 28 vollständige Buchführung über dessen Wirksamkeit gegenüber einem Nutzer. Diese vollständige Buchführung kann an einem Systemterminal 60 oder einer Referenzstation 50 zu einem späteren Zeitpunkt ausgewertet und beispielsweise zur Gewährung weiterer Boni genutzt werden.

Vorgesehen sein kann, daß die im Speicherabschnitt 32 abgelegten Werbeinhalte 28 gelegentlich aktualisiert werden. Dabei werden vorhandene Werbeinhalte 28 ergänzt oder durch neue ersetzt. Die Aktualisierung erfolgt beispielsweise im Rahmen einer Präsentation eines tragbaren Datenträgers 20 an einem Systemterminal 60. Figur 4 veranschaulicht den prinzipiellen Ablauf einer solchen Aktualisierung als Flußdiagramm.

Der tragbare Datenträger 20 wird dabei wiederum an einem Systemterminal 60 präsentiert, Schritt 400, um etwa einen rabattierten Kauf durchzuführen, wie er anhand Figur 3 beschrieben wurde. Grund für die Präsentation an dem Systemterminal 60 kann auch eine andere beabsichtigte Anwendung sein, etwa die Feststellung eines zum Prüfungszeitpunkt in Frage kommenden Bonus oder die Nutzung des tragbaren Datenträgers 20 im Rahmen einer anderen, im integrierten Schaltkreis 28 realisierten Anwendung, etwa einer Geldkartenanwendung.

Hat das Systemterminal 60 die Präsentation eines tragbaren Datenträgers 20 erkannt, prüft es, Schritt 402, ob neue, in den tragbaren Datenträger 20 zu ladende Werbeinhalte 28 bereitstehen. Die Durchführung dieser Prüfung kann im Systemterminal 60 selbst erfolgen, wenn es dazu eingerichtet ist, jeweils aktuelle vorgegebene Dateninhalte 28 bereitzuhalten. Die Durchführung kann alternativ erfolgen, indem das Systemterminal 60 über das Datennetz 40 eine Verbindung zu einer zu dem tragbaren Datenträger 20 gehörenden Referenzstation 50 herstellt und von dieser die jeweils aktuellen Werbeinhalte 28 anfordert.

Parallel zur Vorbereitung der Aktualisierung der Werbeinhalte 28 führt das Systemterminal 60 eine gegebenenfalls von dem Nutzer bei der Präsentation des tragbaren Datenträgers 20 beabsichtigte Aktion oder Anwendung aus, Schritt 404.

Während oder nach Abschluß der Ausführung der Aktion überträgt dann das Systemterminal 60 die bereitgestellten Werbeinhalte 28 an den tragbaren Datenträger 20, Schritt 406, welcher sie in dem entsprechenden Speicherabschnitt ablegt.

Fig. 5 veranschaulicht in größerer Detaillierung die Durchführung der Wiedergabe eines Werbeinhaltes 28 entsprechend Schritt 210. Der tragbare Datenträger 20 fungiert dabei als Werbungs-Proxy und bietet ein CGI zur Ausführung von auf dem tragbaren Datenträger 20 eingerichteten Hilfsprogrammen in Form von CGI-Skripten. Als Netzzugriffsprogramm 42 dient ein üblicher Browser, der die Darstellung von HTML-Seiten erlaubt. Der Werbeinhalt 28 bestehe aus einem Grundinhalt, der auf dem tragbaren Datenträger 20 liege sowie mindestens einem Hauptinhalt, der bei einem Netzteilnehmer 44 liege. Zur Erleichterung der Beschreibung wird nachfolgend ferner nur noch ganzheitlich auf den tragbaren Datenträger 20 Bezug genommen und nicht mehr nach seinen einzelnen Komponenten unterschieden.

Nachdem mittels des Browsers 42 eine Verbindung zu dem tragbaren Datenträger 20 hergestellt ist, bietet dieser dem Nutzer eine Übersicht über ansehbare Werb.einhalte 28 an. Aus den angebotenen Werbeinhalten 28 wählt der Nutzer durch Anklicken eines vorbereiteten Weiterschaltfeldes aus, Schritt 212.

Die Auswahl eines Werbeinhaltes 28 bewirkt den Aufruf eines CGI's auf dem tragbaren Datenträger 20. Durch die Auswahl werden dabei zugleich die Parameter für das CGI festgelegt, die der Browser 42 an tragbaren Datenträger 20 übergibt, Schritt 214. Die Übergabe kann beispielsweise mittels eines Kommandos der Art "GET/cgi-bin/werbung.cgi?parameter=xyz" erfolgen. Mit den übergebenen Parameteren führt der tragbare Datenträger 20 das CGI sodann aus, Schritt 216. Die CGI-Ausführung umfaßt mehrere Schritte, wie durch die strichlierte Einfassung angedeutet ist.

Der Hauptinhalt des Werbeinhaltes 28 befindet sich nicht auf dem tragbaren Datenträger 20, sondern liegt auf dem Server eines Werbetreibenden, der als Netzteilnehmer 44 über das Datennetz 40 erreichbar ist. Das CGI erzeugt deshalb zunächst eine Anforderung an den Server zur Bereitstellung des Hauptinhaltes. Die Anforderung, etwa in Gestalt eines Befehles der Art "GET/werbung.xml", leitet der Datenträger 20 über das Nutzerendgerät 10 und das Datennetz 40 an den Server 44. Dieser antwortet durch Rücksenden des angeforderten Hauptinhaltes, Schritt 220, also etwa durch Rücksenden des Inhaltes der Serverdatei "werbung.xml".

Nach Eingang auf dem tragbaren Datenträger 20 konvertiert das CGI den erhaltenen Hauptinhalt in ein zur Darstellung durch den Browser 42 geeignetes Dateiformat und leitet das Ergebnis weiter an den Browser 42, Schritt 222. Weiter veranlaßt das CGI die Ermittlung eines Bonus für den Nutzer und speichert ihn im Protokollabschnitt 32, Schritt 224.

Der Browser 42 gibt schließlich auch den Hauptinhalt des Werbeinhaltes 28 auf den Ausgabemitteln 18 des Nutzerendgerätes 10 wieder, Schritt 226.

Das in Fig. 5 dargestellte Verfahren ermöglicht die Wiedergabe umfangreicher Werbeinhalte 28, da nur der Grundinhalt auf dem tragbaren Datenträger 20 selbst, die Hauptinhalte aber bei einem Netzteilnehmer 44 gespeichert werden können.

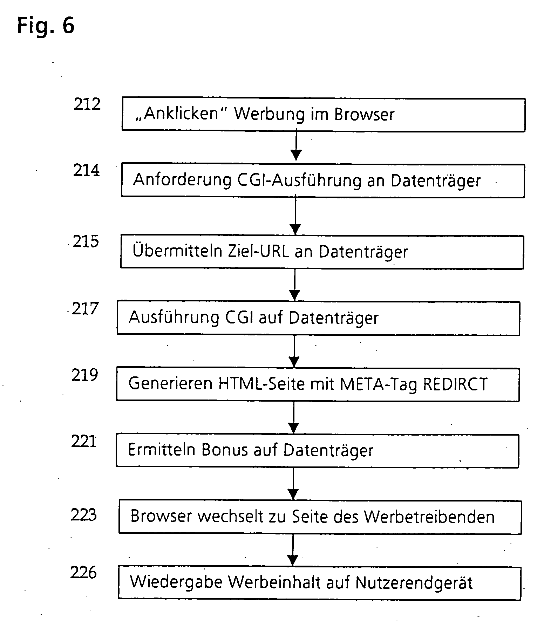

Eine Variante dieses Verfahrens, die vergleichbares leistet, zeigt Fig. 6. Der tragbare Datenträger 20 ist wiederum dazu eingerichtet, ein CGI auszuführen. Das CGI bewirkt jetzt aber eine indirekte Wiedergabe eines Hauptinhaltes ohne Zwischenschaltung des tragbaren Datenträgers 20.

Das Verfahren stimmt zunächst mit der in Fig. 5 gezeigten Variante überein. Der Nutzer bekommt nach Präsentation des tragbaren Datenträger 20 eine Übersicht über auswählbare Werbeinhalte 28 angeboten und wählt durch Anklicken eines vorbereiteten Weiterschaltfeldes eines davon aus, Schritt 212 Der Browser 42 übermittelt dem tragbaren Datenträger 20 darauf eine Aufforderung zur Ausführung eines CGI's, Schritt 214.

Mit der Aufforderung erhält der tragbare Datenträger 20 als Parameter für das CGI eine Ziel-Datennetzadresse, unter der der Hauptinhalt eines Werbeinhaltes 28 abgelegt ist, Schritt 215.

Der tragbare Datenträger 20 führt nun das CGI aus, Schritt 217. Zunächst generiert das CGI hierbei eine HTML-Seite, Schritt 219, die den Grundinhalt bildet und die Auswahl des Nutzers noch einmal bestätigt. Die Seite enthält weiter eine Ziel-Datennetzadress des Werbetreibenden, unter der der Hauptinhalt des Werbeinhaltes 28 abgelegt ist, sowie eine Steuerinformation, etwa in Gestalt des META-TAGs "REDIRECT", welche bewirkt, daß der Browser 42 nach Ablauf einer in der als Grundinhalt wiedergegebenen HTML-Seite definierten Zeit automatisch zu der als Ziel-Datennetzadresse angegebenen Seite des Werbetreibenden wechselt. Tabelle 1 zeigt eine HTML-Seite, die das Vorbeschriebene leistet. Darin bilden die Zeilen <meta http-
equiv="refresh" content=2; URL=http://djc.gdm.de/
golden/index2.html"> das META-TAG.

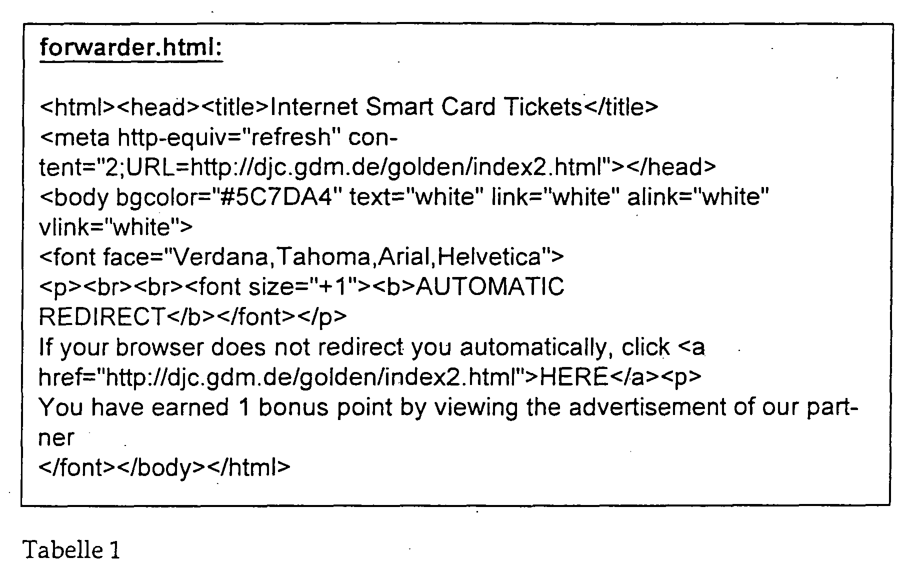

Sodann bewirkt das CGI die Bonifizierung der Kenntnisnahme und ermittelt für den Nutzer einen Bonus, Schritt 221. Zweckmäßig ist hierbei die alleine durch Auswählen eines bestimmten Werbeinhaltes 28 erzielbare Gesamtbonifikation begrenzt.

Anschließend wechselt der Browser 42 zu der bezeichneten Seite, Schritt 223, und bringt den Hauptinhalt des Werbeinhaltes 28 zur Wiedergabe, Schritt 226.

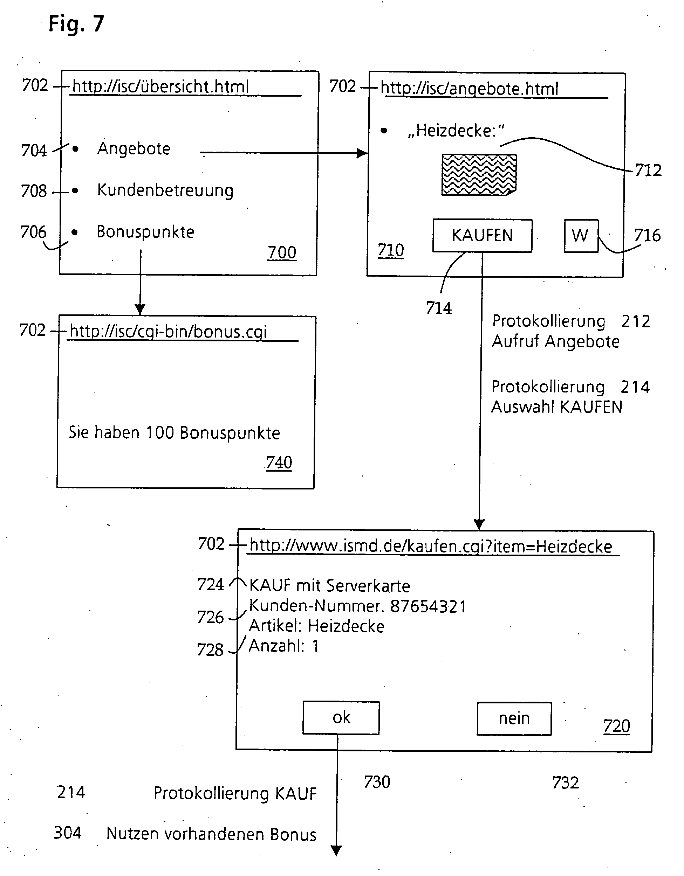

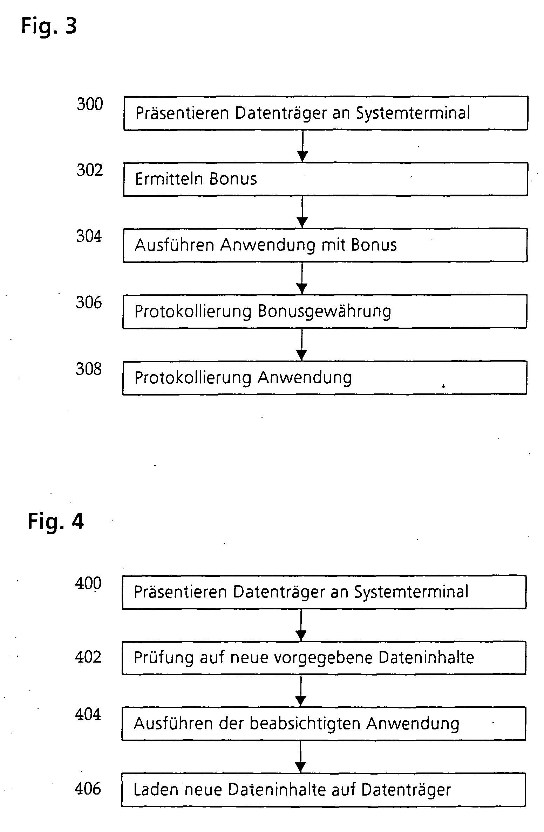

Fig. 7 zeigt mögliche Bildschirmdarstellungen, wie sie einem Nutzer bei der Verwendung eines tragbaren Datenträgers 20 auf dem Nutzerendgerät 10 zur Anzeige gebracht werden. Alle Bildschirmdarstellungen enthalten jeweils eine Kopfzeile 702 mit der entweder nur auf den tragbaren Datenträger 20 - http://isc - oder auf das gesamte Datennetz 40 - http://www. - bezogenen Adresse. Bei Präsentation des tragbaren Datenträgers 20 an der Schnittstelle 16 werden danach zunächst Grundfunktionen dargestellt, aus denen der Nutzer eine auswählt. Im Beispiel kann der Nutzer zwischen den Grundfunktionen "Angebote" 704, "Bonuspunkte" 706 und "Kundenbetreuung" 708 wählen.

Wählt der Nutzer die Grundfunktion "Bonuspunkte" 706, so bewirkt der tragbare Datenträger 20 die Wiedergabe einer Bildschirmdarstellung 740, welche den auf dem tragbaren Datenträger 20 vorhandenen Bonus mitteilt.

Wählt der Nutzer die Grundfunktion "Angebote" 704, so bewirkt der tragbare Datenträger 20 die Wiedergabe einer neuen Bildschirmdarstellung 710 mit dem Grundinhalt eines Werbeinhaltes 28. Die Auswahl wird zudem, entsprechend Schritt 212, von einem Agentprogramm 30 auf dem tragbaren Datenträger 20 protokolliert. Die Bildschirmdarstellung 710 enthält zweckmäßig eine Beschreibung eines beworbenen Produktes 712 sowie ein Weiterschaltfeld 714, das unmittelbar die Einleitung eines Kaufvorganges ermöglicht. Weiter enthält die Bildschirmdarstellung 710 ein zweites Weiterschaltfeld 716, das die Wiedergabe des nächsten Werbeinhaltes 28 bewirkt. Betätigt der Nutzer das zweite Weiterschaltfeld 716, bringt der tragbare Datenträger 20 den nächsten Werbeinhalt 28 zur Wiedergabe; zugleich protokolliert, entsprechend Schritt 214, wiederum das Agentprogramm 30 die neue Auswahl.

Betätigt der Nutzer das den Kauf einleitende Weiterschaltfeld 714, stellt der tragbare Datenträger 20 über das Datennetz 40 eine Verbindung einem Netzteilnehmer 44 her, über den anschließend der Kaufvorgang abgewickelt wird. Auf der Anzeige des Nutzerendgerätes 10 wird dabei von dem Netzteilnehmer 44 ein Bildschirmdarstellung 720 zur Anzeige gebracht, der Informationen zu dem Kaufvorgang wiedergibt. Die Informationen können z.B. Angaben 724 zur Art des Kaufes, zur Identifizierung den Nutzers 726 und zum gekauften Artikel 728 enthalten. Die Bildschirmdarstellung 720 umfaßt ein erstes Weiterschaltfeld 730 zur Bestätigung des Kaufvorganges sowie ein zweites Weiterschaltfeld 732 zum Abbruch des Kaufvorganges. Bestätigt der Nutzer den Kaufvorgang durch Betätigen des ersten Weiterschaltfeldes 730, kann der Kaufvorgang wiederum entsprechend Schritt 214 auf dem tragbaren Datenträger 20 protokolliert werden; ebenso kann ein auf einem tragbaren Datenträger 20 eventuell vorhandener Bonus gemäß Fig. 3 zur Ausführung des Kaufvorganges eingesetzt werden.

Unter Beibehaltung des grundlegenden Konzeptes, auf einem zur Wechselwirkung mit einem Systemterminal 60 oder einer Referenzstation 50 vorgesehenen Datenträger 20 vorgegebene Dateninhalte 28 zusammen mit einem Mechanismus zur Wiedergabe und der Protokollierung der Kenntnisnahme der Wiedergabe einzurichten, erlaubt die Erfindung neben der beschriebenen Ausführung eine Reihe von weiteren Ausgestaltungen, auf die hier nicht im Detail eingegangen wird. Insbesondere können die einzelnen Elemente der anhand der Figuren beschriebenen Ausführungsbeispiele in beliebiger Weise miteinander verbunden werden. In einer Variante zur Protokollangabenauswertung kann die Auswertung der im Speicherabschnitt 32 angelegten Protokollangaben einschließlich des daraus resultierenden Bonus bereits auf dem tragbaren Datenträger 20 erfolgen. Die Dateninhalte 28 sind nicht auf Werbung beschränkt, sondern können auch reine Information sein. In weitem Rahmen gestaltbar sind ferner Erstellung und Verbreitung neuer vorgegebener Dateninhalte 28. Beispielsweise kann vorgesehen sein, daß neue vorgegebene Dateninhalte 28 auch über ein Nutzerendgerät 10 auf einen tragbaren Datenträger 20 gebracht werden.

## Patentansprüche

1. System zur Bonifikation der Kenntnisnahme vorgegebener Dateninhalte, insbesondere elektronischer Werbung, durch einen Nutzer, mit
einem Nutzerendgerät (10), das zur Ausführung eines Netzzugriffsprogrammes (42) zur Ermittlung und Wiedergabe von in einem Datennetz (40) gespeicherten Dateninhalten eingerichtet ist,
einem tragbaren Datenträger (20) zur Aufnahme vorgegebener Dateninhalte (28), welcher eine Schnittstelle (26) zu dem Netzzugriffsprogramm (42) besitzt,
mindestens einem Agentprogramm (30), das auf dem tragbaren Datenträger (20) eingerichtet ist und das bei Wiedergabe vorgegebener Dateninhalte (28) auf dem Nutzerendgerät (10) Angaben über mit der Wiedergabe verbundene Aktionen des Nutzers aufzeichnet,
sowie einem Systemterminal (60) mit Mitteln zur Auswertung der auf dem tragbaren Datenträger (20) aufgezeichneten Angaben.

2. System nach Anspruch 1, **dadurch gekennzeichnet, daß** das Agentprogramm (30) aufgrund der aufgezeichneten aktionsbezogenen Angaben einen Bonus ermittelt und an ein Systemterminal (60) mitteilt.

3. System nach Anspruch 1, **dadurch gekennzeichnet, daß** ein vorgegebener Dateninhalt (28) einen Grundinhalt und einen Hauptinhalt umfaßt, wobei der Hauptinhalt bei einem an das Datennetz (40) angeschlossenen Netzteilnehmer (44) abgelegt ist und der Grundinhalt auf dem tragbaren Datenträger (20) eine Datennetzadresse des Netzteilnehmers (40) beinhaltet.

4. System nach Anspruch 1 **dadurch gekennzeichnet, daß** ein wiedergegebener vorgegebener Dateninhalt (28) ein Weiterschaltfeld (704, 714) beinhaltet, dessen Betätigung die Wiedergabe eines zugeordneten weiteren vorgegebenen Dateninhaltes (28) bewirkt und das Agentprogramm (30) die Betätigung des Weiterschaltfeldes (704, 714) durch einen Nutzer aufzeichnet.

5. System nach Anspruch 1, **dadurch gekennzeichnet, daß** das Systemterminal (60) aufgrund der von dem tragbaren Datenträger (20) aufgezeichneten Angaben einen Bonus bestimmt und dieser Bonus unmittelbar zur Anwendung kommt.

6. System nach Anspruch 1, **dadurch gekennzeichnet, daß** der tragbare Datenträger (20) eine Chipkarte ist.

7. System nach Anspruch 1, **dadurch gekennzeichnet, daß** das Systemterminal (60) dem tragbaren Datenträger (20) ein Kennungssignal zu einer Leistung oder einem Gegenstand mitteilt, wenn ein Bonus umgesetzt wurde.

8. Verfahren zur Bonifikation der Kenntnisnahme vorgegebener Dateninhalte, insbesondere elektronischer Werbung, durch einen Nutzer mit folgenden Schritten:
Speichern mindestens eines Agentprogrammes (30) zur Erfassung von in Reaktion auf die Wiedergabe vorgegebener Dateninhalte (28) erfolgten Aktionen eines Nutzers auf einem tragbaren Datenträger (20),
Speichern von vorgegebenen Dateninhalten (28), deren Kenntnisnahme bonifiziert werden soll, auf dem tragbaren Datenträger (20),
Präsentieren des tragbaren Datenträgers (20) an einem Nutzerendgerät (10), das zur Wiedergabe von auf dem tragbaren Datenträger (20) abgelegten, vorgegebenen Dateninhalten (28) geeignet ist,
Veranlassen der Wiedergabe eines vorgegebenen Dateninhaltes (28) über das Nutzerendgerät (10),
Aufzeichnen von Angaben zu in Reaktion auf die Wiedergabe des Dateninhaltes (28) ausgeführten Aktionen des Nutzers durch das Agentprogramm (30).

9. Verfahren nach Anspruch 8, **dadurch gekennzeichnet, daß** aufgrund der durch das Agentprogramm (30) aufgezeichneten Angaben ein Bonus ermittelt wird.

10. Verfahren nach Anspruch 8, **dadurch gekennzeichnet, daß** die Ermittlung eines Bonus aufgrund der durch das Agentprogramm (30) aufgezeichneten Angaben auf dem tragbaren Datenträger (20) erfolgt.

11. Verfahren nach Anspruch 8, **dadurch gekennzeichnet, daß** die durch das Agentprogramm (30) aufgezeichneten Angaben in einem Systemterminal (60) ausgewertet werden.

12. Verfahren nach Anspruch 8, **dadurch gekennzeichnet, daß** die auf einem tragbaren Datenträger (20) abgelegten vorgegebenen Dateninhalte (28) regelmäßig oder bei Eintritt bestimmter Ereignisse aktualisiert werden.

13. Verfahren nach Anspruch 12, **dadurch gekennzeichnet, daß** zur Vorbereitung der Aktualisierung von vorgegebenen Dateninhalten (28) eine Verbindung zwischen einem Nutzerendgerät (10) oder einem Systemterminal (60) und einer Referenzstation (50) hergestellt wird.

14. Verfahren nach Anspruch 8, **dadurch gekennzeichnet, daß** von dem Agentprogramm (30) aufgezeichnete Angaben, nachdem sie ausgewertet wurden, markiert werden.

15. Verfahren nach Anspruch 8, **dadurch gekennzeichnet, daß** die Anzahl der durch Aktionen eines Nutzers in Bezug auf einen bestimmten, auf einem tragbaren Datenträger (20) gespeicherten vorgegebenen Datentinhalt (28) erzielbaren Bonuspunkte begrenzt ist.
